# EUROPÄISCHE PATENTSCHRIFT

(11) **EP 0 689 365 B1**
(45) Veröffentlichungstag und Bekanntmachung des Hinweises auf die Patenterteilung: **24.01.2001**
(21) Anmeldenummer: 95107287.5
(22) Anmeldetag: 13.05.1995
(51) Int. Cl.: H04Q 1/14

(54) **Verteilereinrichtung, insbesondere für den Hauptverteiler von Fernsprech- und Datenleitungen**
Distribution apparatus, particularly for the main distributor of telecommunications or data lines
Dispositif de répartition, particulièrement pour le répartiteur général des lignes de télécommunications ou de données

(30) Priorität: 20.06.1994 DE 4423339
(43) Veröffentlichungstag der Anmeldung: 27.12.1995
(73) Patentinhaber: KRONE GmbH, 14167 Berlin (DE)
(72) Erfinder: Dohnke, Ingo, D-14169 Berlin (DE)

(56) Entgegenhaltungen:
- EP-A- 0 518 390
- EP-A- 0 576 318
- EP-A- 0 624 043

## Beschreibung

Die Erfindung bezieht sich auf eine Verteilereinrichtung, insbesondere für den Hauptverteiler von Fernsprech- und Datenleitungen gemäß dem Oberbegriff des Anspruches 1.

Derartige Verteilereinrichtungen, insbesondere für den Hauptverteiler von Fernsprechanlagen, dienen als Schnittstelle für die Teilnehmer- und Vermittlungsstellen von Fernsprechanlagen.

Aus der DE 43 06 349 C1 ist eine Verteilereinrichtung, insbesondere für den Hauptverteiler von Fernsprech- und Datenleitungen bekannt, der aus einer Mehrzahl von Verteilerleisten mit auf der Anschlußseite angeordneten Kontaktelementen zum Anschluß sowohl der Teilnehmer- als auch der Vermittlungskabel, mit von der Betriebsdienstseite her an die im Inneren der Verteilerleisten angeordneten Kontaktelemente anschließbaren Steckern, gebildet ist und bei der im Inneren der Verteilerleisten in nebeneinander angeordneten Verteilerbauelementen Kontaktelemente eingebracht sind, die zwei Trennstellen und einen Aufschaltekontakt auf der Betriebsdienstseite und zwei Aufschaltekontakte auf der rückwärtigen Anschlußseite bilden. Die Kontaktelemente im Inneren jedes Verteilerbauelementes bilden mit einer Doppelader des Vermittlungskabels und des Teilnehmerkabels einen geschlossenen Leitungsweg, welcher über die vorne liegende Betriebsdienstseite über übereinander angeordnete Öffnungen mittels Stecker manipuliert wird.

Nachteilig ist es bei dieser Verteilereinrichtung, daß eine komplizierte Kontaktgestaltung mit vielen Einzelteilen die Ausbildung des Schaltmittels erschwert. Darüber hinaus muß auch jede Rangier- und Schutzfunktion durch Stecker realisiert werden.

Der Erfindung liegt von daher die Aufgabe zugrunde, eine Verteilereinrichtung der gattungsgemäßen Art so weiterzubilden, daß alle Arbeiten des Betriebsdienstes von einer Seite des Gestelles mit der Verteilereinrichtung erledigt werden können, wobei die Verteilereinrichtung unkompliziert aufgebaut sein soll und einen geringeren Platzbedarf erfordert.

Zur Lösung dieser Aufgabe sieht die Erfindung die kennzeichnenden Merkmale des Anspruches 1 vor. Durch den modularen Aufbau der Verteilerleisten mit der darin angeordneten in besonders günstiger Weise ausgestalteten Kontaktfeder wird ein geringerer Platzbedarf erreicht. Das integrierte vollständige Überspannungsschutz-Konzept verringert die Anzahl der notwendigen Kontaktstellen. Es wird eine volle Flexibilität bei Umschaltungen im gesamten Netz insbesondere auch durch die Benutzung der gleichen Bauteile im gesamten Leitungsnetz erreicht. Die Schaltmittel sind einfacher und damit kostengünstiger in der Herstellung und bei der Montage gestaltet. Mit dem erfindungsgemäß konzipierten Schaltmittel wird die Leistungsfähigkeit der Schnittstellen zum Netz erhöht. Auch die vorhandene Technik kann besser als bisher genutzt werden. Die gesamte Verkabelung erfolgt durch Stecken. Änderungen sind schnell und wirtschaftlich durchführbar.

Die Erfindung ist nachfolgend anhand eines in den Zeichnungen dargestellten Ausführungsbeispieles einer Verteilereinrichtung näher erläutert. Es zeigen:
- Fig. 1: eine perspektivische Prinzipdarstellung einer Verteilereinrichtung,
- Fig. 2: eine perspektivische Darstellung einer Verteilerleiste in der Verteilereinrichtung nach Fig. 1,
- Fig. 3: einen Schnitt durch die Verteilerleiste nach Fig. 2,
- Fig. 4: eine perspektivische Darstellung der Kontaktfeder, wie sie in der Verteilerleiste gemäß der Figuren 2 und 3 verwendet ist,
- Fig. 5: eine Schnittdarstellung durch mehrere übereinander gesteckte Verteilerleisten nach Fig. 2 mit Fernmeldekontakten als Trenn-/Schaltkontakt ausgebildet,
- Fig. 6: eine perspektivische Darstellung seitlich aneinander reihbarer Verteilerleisten,
- Fig. 7: eine perspektivische Darstellung von seitlich und übereiandergereihten Verteilerleisten mit Rangierdrähten und
- Fig. 8: eine perspektivische Darstellung der Verbindung einer Verteilerleiste mit einer Leiterplatte.

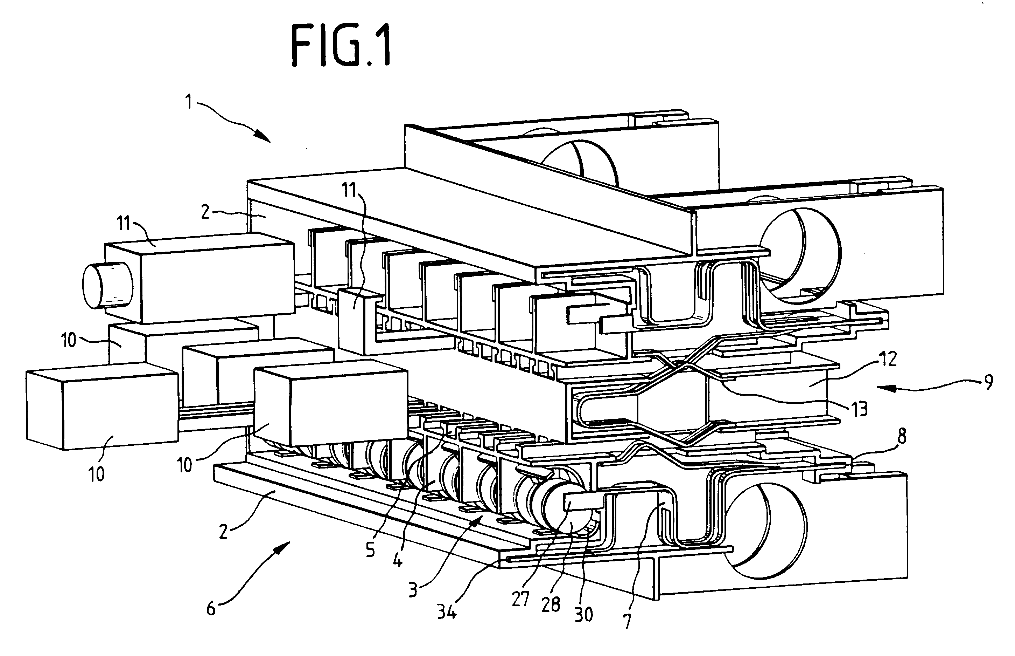

Die in Fig. 1 vereinfacht dargestellte Verteilereinrichtung 1 umfaßt Verteilerleisten 2 mit Verteilerbauelementen 3 mit Öffnungen 4,5,34 auf der Betriebsdienstseite 6, mit Kontaktfedern 7 im Inneren und mit Schlitzen 8 auf der Anschlußseite 9 zur Aufnahme der Adern eines ankommenden Kabels (nicht dargestellt), z.B. einem Systemkabel, sowie Stecker 10 zum Schützen, Stecker 11 zum Trennen und zum Aufschalten von Leitungswegen und ein Mittelteil 12 mit Kontaktelementen 13 zur Bildung einer zweiten Trennstelle. Jeder Leitungsweg, gebildet aus einer Doppelader, ist dabei einzeln schützbar. Die Verteilereinrichtung 1 besteht hier aus zwei übereinander leicht versetzt liegenden Verteilerleisten 2 und dem dazwischen angeordneten Mittelteil 12. Die oben liegende Leiste 2 ist dabei um 180 Grad zur unten liegenden Leiste 2 auf das Mittelteil 12 aufgerastet. Jede Verteilerleiste 2 besteht aus 8 Verteilerbauelementen 3 für acht Doppeladern.

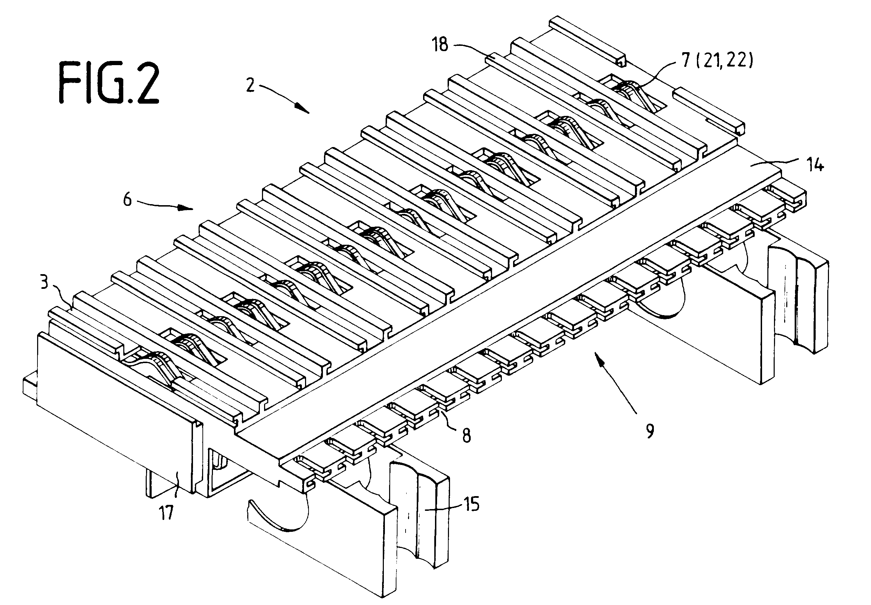

Die Fig. 2 zeigt in perspektivischer Ansicht eine Verteilerleiste 2 für acht Doppeladern, wie sie zum Abschluß von Kabeln im Hauptverteiler, aber auch in Kabelverzweigern und in der Übertragungstechnik verwendbar sind. Die Verteilereinrichtung 1 ist modular aus diesen Verteilerleisten 2 aufgebaut. Vorzugsweise sind die Verteilereinrichtungen 1 aus Verteilerleisten 2 mit einer Anschaltekapazität von jeweils acht Doppeladern aufgebaut. Es sind jedoch auch vier Doppelader-Einheiten realisierbar.

Die Verteilerleiste 2 besteht aus einem Gehäuseteil 14 mit Rastvorrichtungen 15 zum Aufrasten auf einen aus Rundstangen gebildeten Rahmen (nicht dargestellt) sowie mit Reihen von Schlitzen 8 zur Aufnahme von Kabeladern und mit Verbindungselementen 17,18 zum Aneinanderreihen von Leisten 2 in waagerechter und senkrechter Folge. Jede Verteilerleiste 2 ist in der Art eines Steckers aufgebaut und kann als solcher im Kabelnetz oder im Vermittlungssystem benutzt werden. Dadurch können am Kabelnetz oder in Vermittlungssystemen Änderungen durch Umstecken vorgenommen werden. Das Neubeschalten und Umrangieren wird unnötig. Jedes mit der Verteilereinrichtung 1 nach Fig. 1 abgeschlossene Kabel kann schnell an jedes beliebige Gerät der Übertragungstechnik angesteckt werden. Die einzelnen Kabeladern werden mit Anschlußkontakten 19, z.B. Schneid-Klemm-Kontaktelementen (nicht dargestellt) auf der Anschlußseite 9 der Verteilerleisten 2 abgeschlossen. In der Verteilerleiste 2 ist pro Ader eine einteilige Kontaktfeder 7 eingebracht, über die sämtliche Schutz- und Schaltfunktionen realisiert werden.

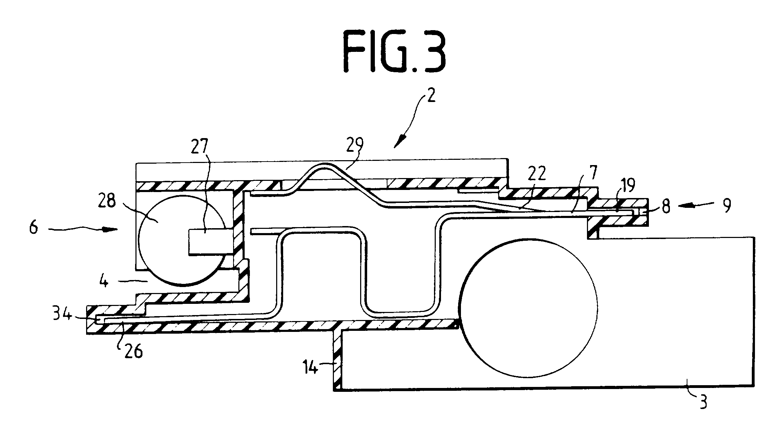

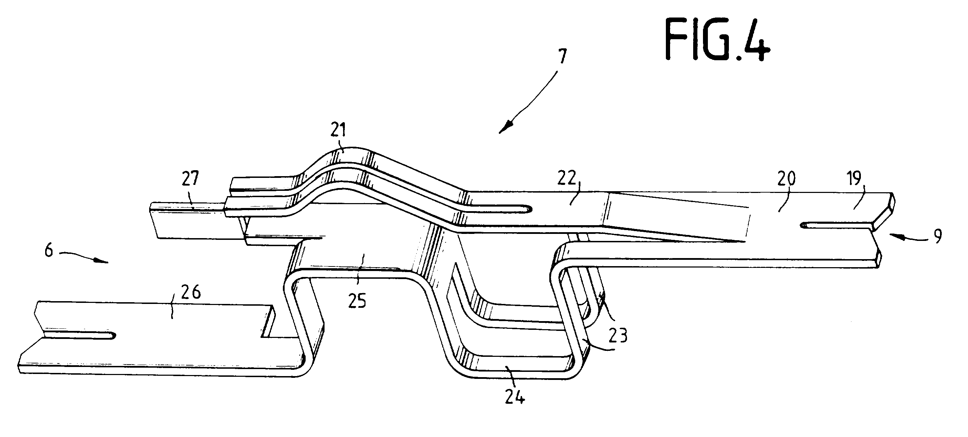

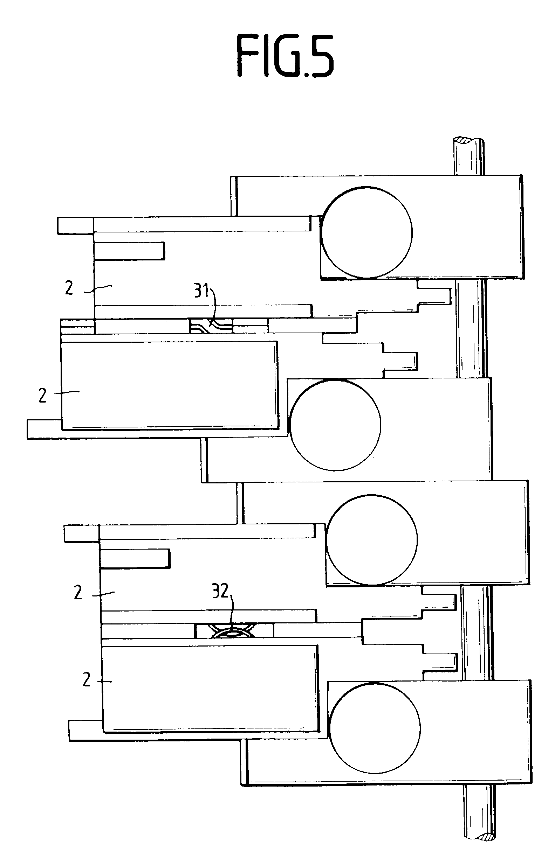

In der Fig. 3 ist in einem Querschnitt durch die Verteilerleiste 2 nach Fig. 2 die Anordnung der Kontaktfeder 7 gezeigt. Die Kontaktfeder 7 ist entsprechend der Darstellung in der Fig. 4 einstückig ausgeführt. Auf der Anschlußseite 9 ist eine Schneidklemme als Anschlußkontakt 19 für das abgeschlossene Kabel (nicht dargestellt) ausgebildet, aus deren Basis 20 eine im mittleren und vorderen Bereich 21 geschlitzte Kontaktfeder 22 zur Ausbildung eines Fernmeldekontaktes herausgebogen ist. Die Kontaktfeder 22 zur Bildung des Fernmeldekontaktes ist geschlitzt ausgeführt, um einen Doppelkontakt und damit eine doppelte Sicherheit zu erreichen. Der aus der Kontaktfeder 22 zu bildende Fernmeldekontakt (siehe Fig. 5) kann als Schalt- oder Trennkontakt 31,32 ausgebildet sein. Die Kontaktfeder 22 ist in einem Teil ihres geschlitzten Bereiches so gebogen, daß sie aus dem Gehäuseteil 14 (Fig.1,2) herausragt. Die durch den Freischnitt der Kontaktfeder 22 aus der Mitte der Basis 20 des Anschlußkontaktes 19 entstandenen Schenkel 23 sind U-förmig abgebogen, wobei die Basen 24 der Schenkel 23 sich am Gehäuseteil 14 abstützen (Fig.2). Die Länge der Schenkel 23 entspricht der Länge des Freischnitts der Kontaktfeder 22. Die Schenkel 23 enden kurz unterhalb einer Vollfläche 25, die parallel zum Anschlußkontakt 19 gebildet ist. Aus der Vollfläche 25 ist auf der Betriebsdienstseite 6 ein zweiter Anschlußkontakt 26 durch Freischnitt und Abwinkelung für den Anschluß eventuell erforderlicher Rangierdrähte herausgeformt. Der zweite Anschlußkontakt 26 liegt nach der senkrechten Abwinkelung aus der Ebene der Vollfläche 25 wiederum parallel zur Vollfläche 25 und zum ersten Anschlußkontakt 19 und liegt auf dem Gehäuseteil 14 auf (Fig.2). Der verbleibende Rest der Vollfläche 25 ist im vorderen Bereich wiederum freigeschnitten und zu einer Kontaktfläche 27 in 90°-Abwinkelung zur Vollfläche 25 gebogen. Die Kontaktfläche 27 dient zur Kontaktierung mit einem Überspannungsableiter 28 (Fig.1).

Die Kontaktfeder 7 ist entsprechend der Darstellung in der Fig. 3 so in das Verteilerbauelement 3 eingebracht, daß der Anschlußkontakt 19 für abgeschlossene Kabel über den Schlitz 8 auf der Anschlußseite 9, der Anschlußkontakt 26 für den eventuellen Anschluß eines Rangierdrahtes über den Schlitz 34 und die Kontaktfläche 27 zum Kontaktieren der Überspannungsableiter 28 über die Öffnung 4 erreichbar ist. Die zur Bildung des Fernmeldekontaktes vorgesehene Kontaktfeder 22 ist über eine Öffnung 29 im Gehäuseteil 14 der Verteilerleiste 2 zugänglich.

Die Fig. 1 zeigt die Ausbildung und Anwendung des Mittelteils 12. Wird vom Anwender ein Überspannungsfeinschutz oder ein 5-Punkte-Schutz gewünscht, so besteht die Möglichkeit, zwischen zwei Verteilerleisten 2 das Mittelteil 12 einzufügen. Dadurch wird über das Kontaktelement 13 eine zweite Trennstelle erzeugt, die zum Einschleifen von Sicherungselementen dient. Der Überspannungsfeinschutz kann getrennt vom Grobschutz installiert werden. Weiterhin ist durch Kontaktierungen im Mittelteil 12 eine Möglichkeit gegeben, den Zustand des ausgelösten Fail-Safes elektrisch nach außen zu melden. Eine Einschränkung des Handlings an der Verteilereinrichtung 1 tritt durch den gesteckten Schutz nicht auf.

Der Überspannungsableiter 28 ist voll in die Verteilerleisten 2 integriert. Nach dem Einsetzen von Erdschienen 30 (Fig.1) in die Verteilerleiste 2 braucht nur noch der Überspannungsableiter 28 für die jeweiligen Doppeladern eingesetzt zu werden, der über die Kontaktfläche 27 der Kontaktfeder 7 den Leitungsweg im Fehlerfall schließt. Der Überspannungsableiter 28 bleibt auch im Betrieb jederzeit von vorne zugängig, so daß auch ein eventuell verwendeter Fail-Safe von vorne sichtbar den Zustand der jeweiligen Doppelader anzeigt.

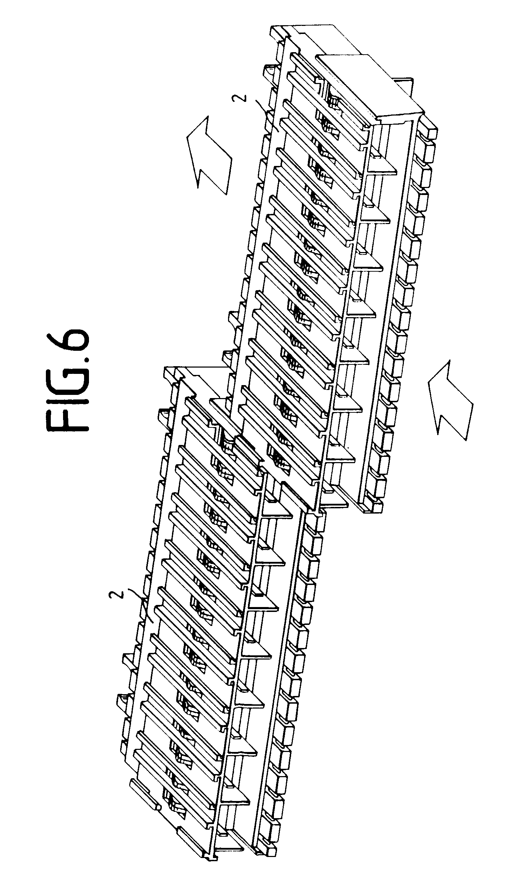

In der Fig. 6 sind seitlich aneinanderreihbare Verteilerleisten 2 gezeigt. Um möglichst flexibel die unterschiedlichen Kabel abschließen zu können, sind die Verteilerleisten 2 seitlich zu 16 DA- oder 24 DA-Leisten aneinander reihbar. Höherpaarige Kabel werden am nicht dargestellten Gestell abgefangen und in die den Leisten 2 entsprechende Anzahl von Doppeladern aufgeteilt. Die so zusammengestellten Abschlußeinheiten eines Kabels können dann mit den gleichen Einheiten eines anderen Kabels oder Gerätes zusammengesteckt werden. Dabei wird durch beide Baugruppen der Fernmeldekontakt entsprechend der Darstellung in der Fig. 5 gebildet. Der Fernmeldekontakt wird aus den mittleren Bereichen 21 der Kontaktfedern 22 der übereinander angeordneten Verteilerleisten 2 gebildet. Der Fernmeldekontakt schaltet jede Ader 1:1 durch. Das Zusammenstecken der Leisten 2 kann in zwei verschiedenen Raststellungen erfolgen, so daß wahlweise ein Trenn- oder Schaltkontakt 32,31 entsteht. Das Umschalten von einer Betriebsart auf die andere kann auch im Betrieb jederzeit reversibel durchgeführt werden.

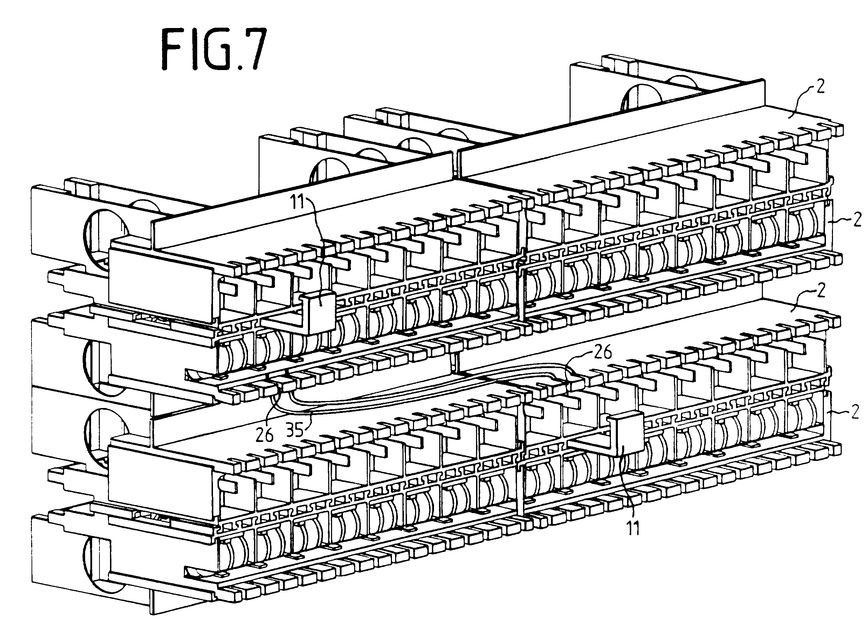

Ist in Ausnahmefällen eine Rangierung von einzelnen Doppeladern nötig, kann durch Stecken eines Trennsteckers 11 und Anschalten eines Rangierdrahtes 35 entsprechend der Darstellung in der Fig. 7 an den vorderen Anschlußkontakt 26 eine Verbindung hergestellt werden, die von der 1:1-Durchschaltung der Leiste 2 abweicht. Die Verteilerleisten 2 bieten die Möglichkeit, bis zu 100 % der angeschalteten Doppeladern zu rangieren.

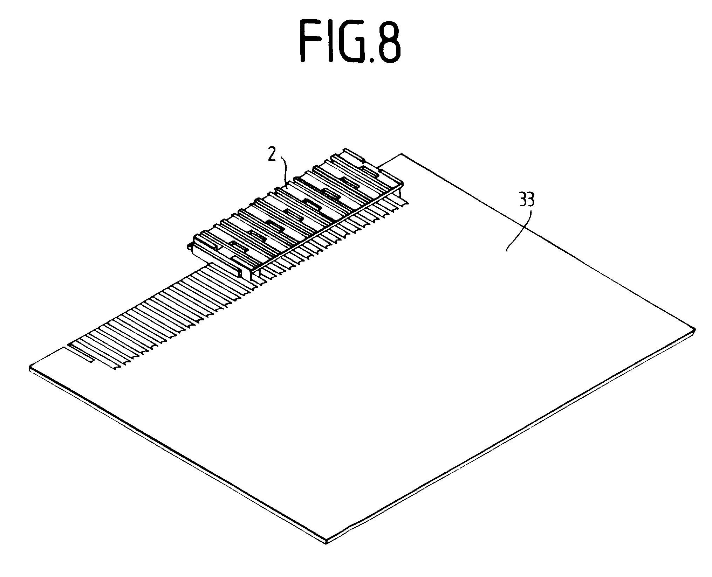

Eine ergänzende Ausführungsform zeigt die Figur 8. In der dargestellten Variante ist die Verteilerleiste 2 zum Kontaktieren von Leiterplatten vorgesehen. Auf der Anschlußseite 9 der Verteilerleiste 2 wird anstelle der Kabelanschaltung eine Leiterplatte 33 eingesteckt. Die Verteilerleiste 2 dient hier als Schnittstelle von aktiver Technik zu den ankommenden Kabeln. Eine Inbetriebnahme des Gerätes erfolgt nur noch durch Anstecken des Kabels. Es besteht auch hier die Prüf- und Trennmöglichkeit, die Rangierbarkeit, die Möglichkeit des Überspannungsschutzes.

Bei einem Aufbau als Hauptverteiler werden die Verteilerleisten 2 in ihrer Kombination als Verteilereinrichtung 1 an einem Gestell in senkrechten Buchten befestigt. Die Verteilerleisten 2 werden dabei vorzugsweise als 16 DA-Einheiten verwendet. Die Verteilerleisten 2 zum Kabelabschluß der Systemkabel werden mit denen auf der Teilnehmerseite zusammengesteckt. Dadurch wird ohne zu rangieren, eine 1:1-Verbindung der Teilnehmer- zu den Systemkabeln hergestellt. Das Nachrüsten oder das Umstecken von Verteilerleisten 2 ist auch nachträglich im Betrieb jederzeit möglich.

Jede senkrechte Bucht kann bis zu 50 Stück dieser durchgeschalteten 16 DA-Einheiten aufnehmen. Somit ergibt sich ein wesentlich höheres Fassungsvermögen von durchgeschalteten Doppeladern als bisher.

Der Anteil an rangierbaren Leitungen kann bis zu 100 % betragen. Es kann also auch ein "klassischer" Rangierverteiler aufgebaut werden, wenn das Umfeld des Hauptverteilers für den modernen Netzaufbau noch nicht vorhanden ist. Der Umbau zu einem Manipulierverteiler mit 1:1-Durchschaltung kann dann auch wieder durch Umstecken der vorhandenen Kabelabschlüsse erfolgen.

Im Kabelverzweiger können die gleichen Verteilerleisten 2 mit den beschriebenen Vorteilen verwendet werden.

## Patentansprüche

1. Verteilereinrichtung, insbesondere für den Hauptverteiler von Fernsprech- und Datenleitungen, aus einer Mehrzahl von Verteilerleisten mit auf der Anschlußseite angeordneten Kontaktelementen zum Anschluß sowohl von Teilnehmer- als auch von Vermittlungskabeln, mit von der Betriebsdienstseite her an die im Inneren der Verteilerleisten angeordneten Kontaktelemente anschließbaren Steckern,
**dadurch gekennzeichnet,** daß
die modular aufgebauten Verteilerleisten (2) Kabelabschlußmodule mit integriertem Überspannungsschutz bilden und daß die Kontaktelemente im Inneren der Verteilerleisten (2) aus einer einstückigen Kontaktfeder (7) mit einem Anschlußkontakt (19) auf der Anschlußseite (9), mit einem weiteren Anschlußkontakt (26) auf der Betriebsdienstseite (6), mit einem Fernmeldekontakt (22) im mittleren Bereich (21) und aus einer Kontaktfläche (27) zur Kontaktierung mit einem Überspannungsschutz (28) gebildet sind.

2. Verteilereinrichtung nach Anspruch 1, dadurch gekennzeichnet, daß jeweils zwei Verteilerleisten (2) aufeinandergerastet einen Fernmeldekontakt (22) bilden.

3. Verteilereinrichtung nach Anspruch 2, dadurch gekennzeichnet, daß durch verschiedene Raststellungen von jeweils zwei Verteilerleisten (2) zueinander, im Betriebsdienst eine Umschaltmöglichkeit des Fernmeldekontaktes (22) von Trennkontakt (32) auf Schaltkontakt (31) und umgekehrt gegeben ist.

4. Verteilereinrichtung nach Anspruch 1, dadurch gekennzeichnet, daß die Verteilerleisten (2) jeweils über ein Mittelteil (12) übereinandergerastet sind, wobei das Mittelteil (12) ein aus dem Mittelteilgehäuse heraus nach oben und unten herausgeformtes Kontaktelement (13) aufweist, welches mit den jeweiligen Fernmeldekontakten (22) zu einer weiteren Trennstelle kontaktiert.

5. Verteilereinrichtung nach Anspruch 1, dadurch gekennzeichnet, daß die Verteilerleisten (2) seitlich aneinanderreihbar sind, wobei die eingebrachten Erdschienen (30) miteinander verbunden sind.

## Claims

1. Distributor device, in particular for the main distribution panel of telephone and data lines, comprising a plurality of distribution strips having contact elements, arranged on the connection side, for connection not only of subscribers but also of exchange cables, and having connectors which can be connected from the technical service side to the contact elements arranged in the interior of the distribution strips,
characterized in that
the distribution strips (2), which are of modular construction, form cable termination modules with integrated overvoltage protection, and in that the contact elements in the interior of the distribution strips (2) are formed from an integral contact spring (7) with a connecting contact (19) on the connection side (9), with a further connecting contact (26) on the technical service side (6), with a telecommunications contact (22) in the central region (21), and from a contact surface (27) for making contact with an overvoltage protection device (28).

2. Distributor device according to Claim 1, characterized in that two distribution strips (2) which are latched onto one another in each case form a telecommunications contact (22).

3. Distributor device according to Claim 2, characterized in that the capability to switch the telecommunications contact (22) from a disconnecting contact (32) to a switching contact (31), and vice versa, is provided in the technical service by means of different latching positions of in each case two distribution strips (2) to one another.

4. Distributor device according to Claim 1, characterized in that the distribution strips (2) are each latched one above the other via a centre part (12), with the centre part (12) having a contact element (13) which is formed at the top and bottom from the centre part housing and makes contact with the respective telecommunications contacts (22) to form a further disconnecting point.

5. Distributor device according to Claim 1, characterized in that the distribution strips (2) can be arranged in a row alongside one another, with the earth rails (30) which are incorporated being connected to one another.

## Revendications

1. Dispositif répartiteur, en particulier pour le répartiteur principal de lignes de télécommunication et de données, constitué d'une pluralité de supports de répartiteur avec des éléments de contact agencés sur le côté de connexion pour la connexion de câbles à la fois d'abonnés et de centre téléphonique, avec des fiches pouvant être reliées depuis le côté service d'exploitation aux éléments de contact agencés à l'intérieur des supports de répartiteur,
caractérisé en ce que les supports de répartiteur (2) construits selon le principe modulaire forment des modules de terminaison de câbles avec une protection intégrée contre la surtension et en ce que les éléments de contact sont formés, à l'intérieur des supports de répartiteur (2), d'un ressort de contact (7) d'un seul tenant avec un contact de connexion (19) sur le côté connexion (9), avec un autre contact de connexion (26) sur le côté service d'exploitation (6), avec un contact de télécommunication (22) dans la zone centrale (21) et d'une surface de contact (27) pour la mise en contact d'une protection contre la surtension (28).

2. Dispositif répartiteur suivant la revendication 1, caractérisé en ce que chaque fois deux supports de répartiteur (2) forment, enclenchés l'un sur l'autre, un contact de télécommunication (22).

3. Dispositif répartiteur suivant la revendication 2, caractérisé en ce qu'il y a, par différents points d'encoche de chaque fois deux supports de répartiteur (2) l'un sur l'autre, en fonctionnement une possibilité de permutation du contact de télécommunication (22) allant du contact de séparation (32) au contact de commutation (31) et inversement.

4. Dispositif répartiteur suivant la revendication 1, caractérisé en ce que les supports de répartiteur (2) s'enclenchent l'un sur l'autre chaque fois par une pièce centrale (12), la pièce centrale (12) présentant un élément de contact (13) formé sortant du boîtier de la pièce centrale vers le haut et vers le bas, lequel est mis en contact avec les contacts de télécommunication (22) respectifs en un autre point séparateur.

5. Dispositif répartiteur suivant la revendication 1, caractérisé en ce que les supports de répartiteur (2) peuvent se suivre l'un l'autre par le côté, les barres de terre (30) introduites étant liées les unes aux autres.
